Europäisches Patentamt

European Patent Office

Office européen des brevets

(19)

(11) Numéro de publication: **0 228 936 B1**

(12) **FASCICULE DE BREVET EUROPEEN**

(45) Date de publication de fascicule du brevet:
02.10.91

(51) Int. Cl.⁵: **H04N 5/20, H04N 9/43**

(21) Numéro de dépôt: **86402656.2**

(22) Date de dépôt: **01.12.86**

(54) **Dispositif de correction de la dynamique de sortie d'un processeur graphique pour l'étude du contraste de luminance.**

(30) Priorité: **05.12.85 FR 8517992**

(43) Date de publication de la demande:
**15.07.87 Bulletin 87/29**

(45) Mention de la délivrance du brevet:
**02.10.91 Bulletin 91/40**

(84) Etats contractants désignés:
**DE IT**

(56) Documents cités:
**DE-A- 3 408 337**
**US-A- 4 187 519**

(73) Titulaire: **ETAT-FRANCAIS représenté par le DELEGUE GENERAL POUR L'ARMEMENT (DPAG)**
**Bureau des Brevets et Inventions de la Délégation Générale pour l'Armement 26, Boulevard Victor**
**F-75996 Paris Armées(FR)**

(72) Inventeur: **Seigneur, Jean-Michel**
**124, Avenue Jean-Jaurès**
**F-76140 Petit Quevilly(FR)**
Inventeur: **Menu, Jean-Pierre**
**1, Square Esquirol**
**F-94000 Créteil(FR)**

## Description

Le secteur technique de la présente invention est celui des appareils pour l'étude du contraste de luminance, comprenant un processeur graphique, un calculateur et un tube cathodique pour l'affichage de stimulation de diverses fréquences spatiotemporelles.

Pour procéder à la détermination de la fonction de sensibilité au contraste de luminance (FSC) chez un individu, des ophtalmologistes ont déjà construit des systèmes à base d'ordinateurs et de générateurs basses fréquences, en adoptant une technique analogique, ou à base de processeurs graphiques en adoptant des techniques numériques. Ces systèmes permettent l'affichage sur écran de mires sinusoïdales.

Les systèmes développés jusqu'à présent sont cependant en général chers, encombrants et d'une mise en oeuvre compliquée, ne permettent souvent pas de mesurer finement la FSC là où l'oeil est le plus sensible et ne prennent pas en compte le paramètre couleurs.

En particulier, les systèmes faisant appel à des techniques numériques comprennent un ordinateur ou microordinateur assurant une automatisation du déroulement des tests, et un processeur graphique connecté à l'ordinateur et pilotant lui-même un tube de télévision monochrome classique qui assure l'affichage de mires sinusoïdales de largeurs variables qui sont les stimulations tests utilisées pour la mesure de la FSC.

Or, outre l'absence de possibilité de provoquer des stimulations en couleur, les systèmes connus de conduite de tests de FSC présentent des inconvénients car ils ne prennent pas en compte le fait que la sensibilité de l'oeil est fonction de la fréquence spatiale qui le stimule. Ainsi, les processeurs graphiques utilisés dans les systèmes connus de détermination de la FSC sont peu précis dans les fréquences moyennes où les contrastes présentés doivent être très faibles puisque c'est là que l'oeil est le plus sensible.

La présente invention vise à remédier aux inconvénients précités et à permettre l'affichage d'images constituées par des réseaux sinusoïdaux contrastés en luminance dont les fréquences spatiale et temporelle, la luminance moyenne et le contraste peuvent être adaptés de façon simple pour permettre de présenter des contrastes très faibles sans qu'il soit nécessaire de disposer d'un processeur graphique présentant un nombre de pas très important ou de modifier la linéarité de la courbe de réponse du processeur.

L'invention permet d'une part d'étudier, par la simulation, la perception d'images complexes chez des sujets présentant divers troubles de vision, et d'autre part, de simuler des conditions de vision dégradées.

Ces buts sont atteints grâce à un dispositif de correction de la dynamique de sortie d'un processeur graphique utilisable notamment dans un appareil d'étude du contraste de luminance du type comportant un calculateur, le processeur et un tube cathodique pour l'affichage de stimulation de diverses fréquences spatio-temporelles, caractérisé en ce qu'il est constitué par un adaptateur d'entrée recevant un signal de luminance du processeur graphique, un atténuateur à coefficient d'atténuation ajustable relié à la sortie de l'adaptateur d'entrée, un générateur de tension de référence de niveau ajustable, un circuit sommateur recevant les signaux de sortie de l'atténuateur et du générateur de tension de référence et de premiers circuits logiques de décodage reliés d'une part au calculateur par l'intermédiaire d'une interface d'entrée et d'autre part à l'atténuateur et au générateur de tension de référence pour assurer la commande de l'ajustement des valeurs du coefficient d'atténuation (Kg) de l'atténuateur et du niveau de tension de référence (Vcg) du générateur de tension de référence.

Les valeurs du coefficient d'atténuation (Kg) de l'atténuateur et du niveau de tension de référence (Vcg) du générateur de tension de référence sont réparties en une série de valeurs discrètes constituant des gammes de sensibilité différente pour un même nombre de niveaux élémentaires de luminance délivrés par le processeur graphique.

Ainsi, l'atténuateur et le générateur de tension de référence peuvent être constitués par un circuit résistif ajustable commandé par les premiers circuits logiques de décodage.

Selon une autre caractéristique de l'invention, la sortie du circuit sommateur est reliée à trois circuits logiques de commutation rouge, vert, bleu, orientant les réseaux de signaux issus du circuit sommateur respectivement vers un canon rouge, un canon vert et un canon bleu du tube cathodique couleur via des circuits de mise à la norme.

Dans ce cas, le dispositif comprend des moyens de réglage manuel du niveau d'excitation de chacun des trois canons rouge, vert et bleu et de seconds circuits logiques de décodage recevant d'une part des signaux de commande émis par le calculateur via l'interface d'entrée et d'autre part un signal de retour de trame émis par le processeur graphique, pour commander le passage d'un fonctionnement individuel des circuits logiques de commutation rouge, vert, bleu à un fonctionnement simultané créant des surfaces neutres sur le tube cathodique.

D'autres caractéristiques et avantages de l'invention ressortiront de la description suivante d'un mode particulier de réalisation, donné à titre d'exemple en référence aux dessins annexés sur lesquels :

- la figure 1 représente le schéma global simplifié d'un dispositif de correction de la dynamique de sortie d'un processeur graphique conformément à l'invention,
- la figure 2 représente un ensemble de réalisation de la logique de commutation,
- la figure 3 représente un exemple de profil de luminance d'une image affichée par l'appareil selon l'invention pour l'examen de la sensibilité du système visuel au contraste de luminance,
- la figure 4 montre l'évolution des valeurs de luminance théorique affichées en fonction du nombre de pas du processeur graphique,
- la figure 5 représente la courbe de la luminance en fonction de la tension appliquée à l'entrée d'un tube cathodique et les différentes plages de tension qui peuvent être utilisées conformément à l'invention pour augmenter la sensibilité au contraste, et
- la figure 6 représente la forme de la courbe de sensibilité du système visuel au contraste en fonction de la fréquence spatiale,

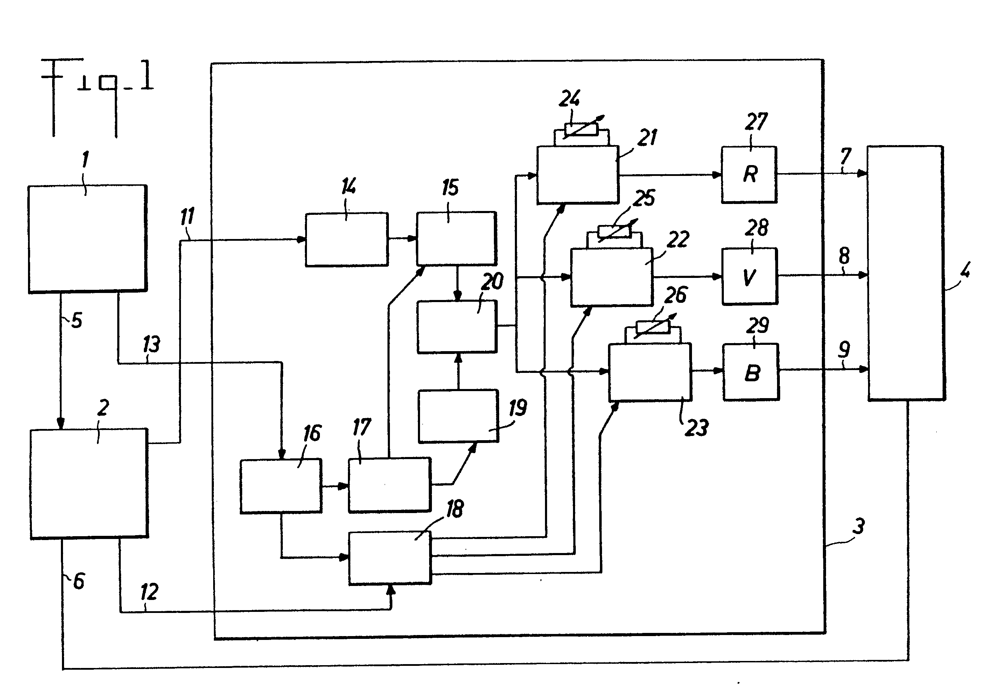

On décrit en référence à la figure 1 les modules essentiels composant un dispositif 3 de correction de dynamique selon l'invention utilisable avec un processeur graphique 2 dont le nombre de niveaux de gris est limité par exemple à 256 et qui avec un calculateur 1 et un tube cathodique couleur 4 permet un relevé aisé et fin de la FSC en couleur.

L'appareil de la figure 1 comprend ainsi un calculateur 1 connecté à un processeur graphique 2 par une liaison 5 et au correcteur 3 par une liaison 13, et un tube cathodique 4. Le processeur 2 est également connecté au correcteur 3 par une liaison 11 et au tube cathodique 4 par une liaison 6. Le correcteur 3 délivre trois ensembles de signaux alimentant le tube cathodique par des liaisons 7, 8 et 9.

Le module de base du correcteur 3 selon l'invention comprend en premier lieu un atténuateur 15 relié par un circuit adaptateur d'entrée 14 à la sortie 11 d'un processeur graphique noir et blanc 2 fournissant une tension d'entrée représentant le signal de luminance. Le circuit adaptateur d'entrée 14 confère au correcteur l'impédance normalisée, par exemple 75 Ω, que doit rencontrer tout processeur graphique pour être en condition normale de bon fonctionnement. L'atténuateur 15 applique à la tension d'entrée Ve issue de l'adaptateur d'entrée 14 un coefficient d'atténuation Kg dont la valeur est fonction de la gamme choisie. La détermination de la gamme parmi les différentes gammes possibles est effectuée à partir des signaux fournis par une ligne 13 de liaison à un calculateur connectée à un circuit d'interface d'entrée 16 qui applique des signaux de commande à de premiers circuits logiques de décodage 17 qui sélectionnent notamment la valeur du coefficient Kg de l'atténuateur 15 en fonction de la gamme choisie.

Le module de base du correcteur comprend en outre un générateur 19 de tension de référence qui est également commandé par les premiers circuits logiques de décodage 17 pour appliquer, en fonction de la gamme choisie, une tension constante de connection VCg (voir ci-dessous la relation (3)) à une entrée d'un circuit sommateur 20 dont l'autre entrée reçoit les signaux de tension atténués issus du circuit atténuateur 15. Le signal de sortie du circuit sommateur 20 correspond ainsi à la somme des tensions provenant de l'atténuateur 15 et du générateur de tension de référence 19.

Un correcteur de dynamique complet comporte d'autant plus de gammes que le processeur graphique dispense peu de pas et comprend donc en fait, compte tenu des valeurs du coefficient d'atténuation Kg et de la tension constante de correction VCg qui diffèrent pour les différentes gammes, une batterie d'atténuateurs et de générateurs de tension de référence, le choix d'un couple de ces éléments se déduisant directement des choix de la gamme et de la couleur.

La commande de ce choix est effectuée par exemple par une liaison du type série à partir du calculateur associé au processeur graphique. La liaison avec le calculateur peut être une ligne série à faible débit, par exemple de 9600 bauds qui implique la mise en oeuvre, en tant qu'interface d'entrée 16, d'un émetteur-récepteur universel asynchrone. A la sortie de cette interface, quatre bits peuvent servir à déterminer la gamme utile. La commande des N batteries (atténuateur 15 et générateur de référence 19) est alors faite à partir de ces quatre bits par les circuits logiques de décodage 17 de sélection d'un couple d'éléments parmi N couples.

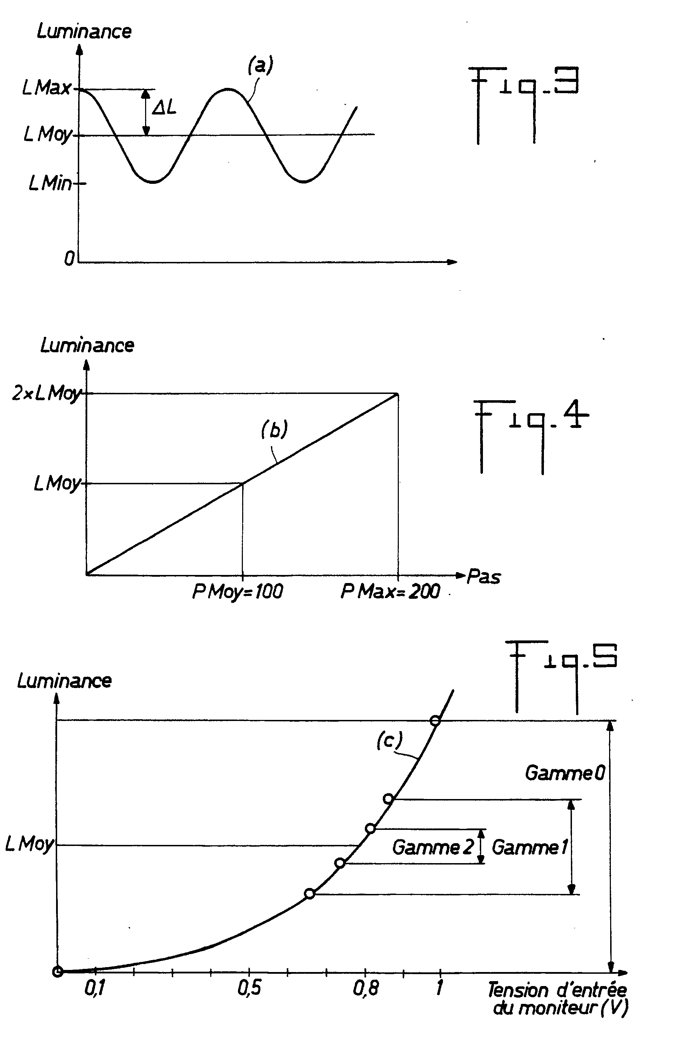

Le correcteur de dynamique représenté sur la figure 5 constitue en outre un système transformant un processeur graphique noir et blanc et un appareil de mesure de la FSC en couleur grâce à la présence de trois circuits logiques de commutation 21, 22, 23. Le rôle de ces trois circuits logiques de commutation est double. Ils doivent d'une part, lors de la présentation des réseaux issus du circuit sommateur 20, orienter le signal utile vers le canon rouge, le canon vert ou le canon bleu du tube cathodique, et d'autre part, permettre la création de surfaces blanches (c'est-à-dire neutres) sur le tube couleur. Pour la création de surfaces neutres, il est nécessaire d'exciter les trois canons rouge, vert et bleu simultanément, mais à des niveaux différents. Le réglage de ces différents niveaux peut être réalisé manuellement à l'aide de résistances ajustables 24, 25, 26 associées aux circuits logiques de commutation 21, 22, 23.

EP 0 228 936 B1

Afin d'éviter tout déchirement de l'image, les passages entre réseaux et plage neutre doivent obligatoirement se faire pendant le retour de trame. Ceci est effectué grâce à la présence de seconds circuits logiques de décodage 18 qui reçoivent des signaux d'une part du calculateur, par l'intermédiaire de l'interface d'entrée 16, et d'autre part, du processeur graphique (liaison 12 permettant l'envoi de signaux de retour de trame), et qui sont reliés aux trois circuits logiques de commutation 21, 22, 23 auxquels ils envoient des signaux de commande.

En sortie des circuits logiques de commutation 21, 22, 23, des circuits 27, 28, 29 de mise à niveau et de mise à la norme permettant de fournir un niveau de sortie compris dans une plage prédéterminée, par exemple entre 0 et 1 volt et de créer une impédance de sortie normalisée, par exemple de 75Ω.

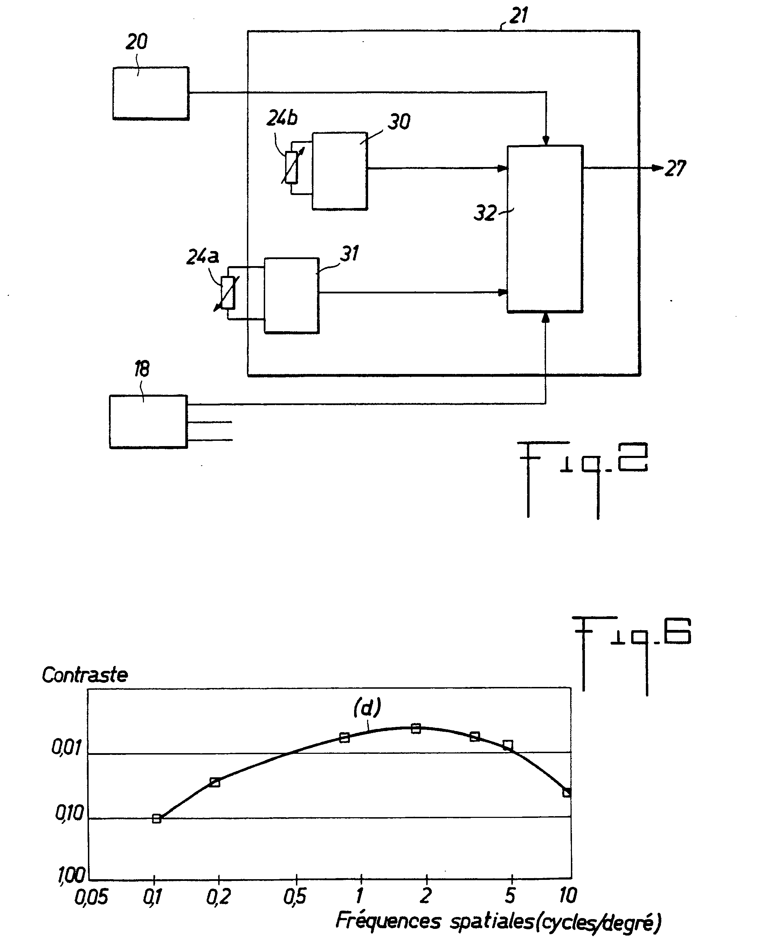

La logique de commutation représentée sur la figure 2 comprend deux générateurs de tension ajustable 30, 31. Le générateur 30 règle le niveau de noir pour l'extinction du spot lors de son passage hors stimulation ou lorsque la couleur de stimulation n'est pas sélectionnée. Le générateur 31 fixe le niveau de couleur nécessaire à la création de la plage neutre. Un commutateur logique à transistors 32, commandé par le circuit logique 18, transfère aux circuits de mise à la norme 27, 28, 29, soit le signal de luminance issu du sommateur 20, soit le niveau de noir, soit le niveau nécessaire à la fabrication de la plage neutre. Les résistances ajustables 24a et 24b associées aux générateurs 30 et 31 permettent d'effectuer les réglages de niveau de tension permettant d'obtenir les niveaux de noir et de couleur acquis.

La figure 3 représente le profil d'un réseau sinusoïdal contrasté en luminance qui constitue une structure d'image primaire affichée sur un tube cathodique pour permettre un relevé de la fonction de sensibilité du système visuel au contraste de luminance.

Chaque réseau sinusoidal définissant une courbe sinusoïdale telle que la courbe a de la figure 3 est caractérisé par la fréquence spatiale du signal, en cycles par degré (les degrés étant portés en abcisse sur la figure 3), la luminance moyenne L Moy et le contraste C défini à partir des valeurs de luminance maximale L Max et minimale L Min portées en ordonnée sur la figure 1, suivant la relation (1) suivante :

$$C = (L\ Max - L\ Min) / (L\ Max + L\ Min) \qquad (1)$$

qui devient, en fonction de la luminance moyenne L Moy et de l'écart L entre la luminance moyenne et la luminance maximale :

$$C = \Delta L / L\ Moy \qquad (2)$$

La sensibilité du système visuel est telle que celui-ci est capable de percevoir des contrastes inférieurs à 0,01.

La nécessité de présenter des images test de très faible contraste implique de mettre en oeuvre des réseaux avec des écarts entre luminances qui sont eux-mêmes très faibles.

La figure 4 représente la courbe b donnant la luminance en fonction des pas du processeur graphique dans le cas où l'on considère que la réponse des phosphores de l'écran cathodique est linéaire et que les réseaux présentés sont carrés. On remarque que la présentation d'un contraste de 0,01 correspond à un écart entre les luminances extrêmes égal à un pour cent de leur moyenne, ce qui pour être discernable implique que cet écart corresponde à au moins un pas et donc nécessite de disposer d'un processeur graphique d'au moins 200 pas. Mais le système visuel peut percevoir des contrastes inférieurs à 0,01 (voir la courbe d de la figure 6) pour des fréquences spatiales moyennes. De plus, du fait du gamma du tube cathodique, la réponse des phosphores à l'excitation électronique n'est pas linéaire et en outre les images présentés sont des réseaux sinusoidaux qui impliquent d'afficher tous les niveaux et non seulement deux niveaux extrêmes.

Pour permettre une détermination fiable de la fonction de la sensibilité au contraste, et surtout mesurer une sensibilité de manière fine pour des valeurs élevées de sensibilité correspondant à des contrastes faibles de l'ordre de 0,01 à 0,03 ou inférieurs, il conviendrait d'utiliser un processeur graphique, comportant de l'ordre de 1024 pas. Or une telle capacité qui oblige à manipuler des mémoires importantes ne peut être obtenue que sur les processeurs perfectionnés très coûteux et complexes. On sait en effet que la vitesse est le critère prépondérant pour la construction d'un processeur et que celle-ci pose de plus en plus de problèmes si le nombre de points à afficher est important. Ainsi, dans le mesure où un balayage de ligne de télévision dure moins de 50 microsecondes, si l'on considère une ligne de 500 points, chaque point devra être porté à l'écran pendant 100 nanosecondes.

Selon la présente invention, on évite l'utilisation de processeurs graphiques à nombre de points élevé et on utilise au contraire un processeur graphique classique relativement simple comportant par exemple 256 niveaux de gris auquel on adjoint un dispositif de correction de la dynamique de structure peu

4

coûteuse qui permet de présenter des contrastes plus faibles et plus nombreux qu'avec un simple processeur graphique à 256 niveaux de gris qui n'est normalement bien adapté qu'à l'exploration des contrastes compris entre 1 et 0,3 environ, soit une demi-unité logarithmique.

L'invention repose ainsi sur la constatation qu'un nombre relativement faible de niveaux de gris (256) est suffisant pour explorer une demi-unité logarithmique de contraste, quelle que soit sa position. On utilise ainsi en fait plusieurs fois l'ensemble des niveaux de gris du processeur graphique, mais dans des gammes différentes de tensions appliquées au tube cathodique de façon à explorer chaque fois avec finesse une partie de l'échelle des contrastes perceptibles. La figure 5 montre la courbe $\bar{c}$ donnant la luminance en fonction de la tension d'entrée du moniteur et fait apparaître différentes gammes permettant chacune d'explorer une partie plus petite de la courbe de la luminance moyenne. Ceci conduit bien à une modification de la dynamique du processeur.

Si Ve représente la tension de sortie du processeur et Vs représente la tension de sortie du correcteur de dynamique, on a la relation suivante :

$$Vs = VCg + Kg \times Ve \qquad (3)$$

où Kg représente un facteur constant fonction de la gamme choisie et
VCg représente une tension constante fonction de la gamme choisie.

A titre d'exemple, le correcteur de dynamique peut être adapté pour définir cinq gammes d'exploration correspondant chacune à un contraste maximum et un contraste minimum de la manière suivante :

| gamme | contraste max. | contraste min. | Kg | VCg |
|-------|----------------|----------------|------|-----|
| 0 | 1 | 0,3 | 0 | 0 |
| 1 | 0,3 | 0,1 | 0,3 | VC1 |
| 2 | 0,1 | 0,03 | 0,1 | VC2 |
| 3 | 0,03 | 0,01 | 0,03 | VC3 |
| 4 | 0,01 | 0,003 | 0,01 | VC4 |

Les valeurs VCg pour chaque gamme sont déterminées après mesure des caractéristiques des phosphores du tube cathodique, mais ne sont pas particulièrement critiques dans la mesure où la donnée qui doit être connue avec précision est le contraste réalisé et non la luminance moyenne.

## Revendications

1. Dispositif de correction de la dynamique de sortie d'un processeur graphique (2) utilisable dans un appareil d'étude du contraste de luminance du type comportant un calculateur (1), le processeur graphique (2) et un tube cathodique (4) pour l'affichage de stimulation de diverses fréquences spatiotemporelles,
caractérisé en ce qu'il est constitué par un adaptateur d'entrée (14) recevant un signal de luminance du processeur graphique, un atténuateur (15) à coefficient d'atténuation ajustable relié à la sortie de l'adaptateur d'entrée (14), un générateur (19) de tension de référence de niveau ajustable, un circuit sommateur (20) recevant les signaux de sortie de l'atténuateur (15) et du générateur (19) de tension de référence, et de premiers circuits logiques de décodage (17) reliés d'une part au calculateur par l'intermédiaire d'une interface d'entrée (16) et d'autre part à l'atténuateur (15) et au générateur (19) de tension de référence pour assurer la commande de l'ajustement des valeurs du coefficient d'atténuation (Kg) de l'atténuateur (15) et du niveau de tension de référence (Vcg) du générateur de tension de référence.

2. Dispositif selon la revendication 1, caractérisé en ce que les valeurs du coefficient d'atténuation (Kg) de l'atténuateur (15) et du niveau de tension de référence (Vcg) du générateur (19) de tension de référence sont réparties en une série de valeurs discrètes constituant les gammes de sensibilité différente pour un même nombre de niveaux élémentaires de luminance délivrés par le processeur graphique.

3. Dispositif selon la revendication 1 ou la revendication 2, caractérisé en ce que l'atténuateur (15) et le générateur (19) de tension de référence sont constitués par un circuit résistif ajustable commandé par les premiers circuits logiques de décodage (17).

4. Dispositif selon l'une quelconque des revendications 1 à 3, caractérisé en ce que la sortie du circuit sommateur (20) est reliée à trois circuits logiques de commutation (21,22,23) rouge, vert, bleu, orientant les réseaux de signaux issus du circuit sommateur (20) respectivement vers un canon rouge, un canon vert et un canon bleu du tube cathodique couleur via des circuits (27, 28, 29) de mise à la norme.

5. Dispositif selon la revendication 4, caractérisé en ce qu'il comprend des moyens (24, 25, 26) de réglage manuel du niveau d'excitation de chacun des trois canons rouge, vert et bleu et de seconds circuits logiques de décodage (18) recevant d'une part des signaux de commande émis par le calculateur via l'interface d'entrée (16) et d'autre part un signal de retour de trame émis par le processeur graphique, pour commander le passage d'un fonctionnement individuel des circuits logiques de commutation rouge, vert, bleu (21, 22, 23) à un fonctionnement simultané créant des surfaces neutres sur le tube cathodique.

6. Dispositif selon l'une quelconque des revendications 1 à 5, caractérisé en ce que l'interface d'entrée (16) comprend un émetteur récepteur universel asynchrone relié au calculateur par une liaison du type série.

7. Dispositif selon l'une quelconque des revendications 1 à 6, caractérisé en ce qu'il comprend cinq gammes de coefficient d'atténuation (Kg) par couleur primaire et de niveau de tension de référence (Vcg) correspondant respectivement à cinq gammes de contrastes compris par exemple entre 1 et 0,003.

## Claims

1. Graphic processor (2) output dynamic range corrector designed for use in an illuminance contrast analysis instrument of the type including computer (1), graphic processor (2) and CRT (4) to display stimuli at various spatial and time frequencies,
   Whereby it includes input adapter (14) receiving an illuminance signal from the graphic processor, attenuator (15) with a variable attenuation coefficient connected to the output of an input adapter (14), reference voltage generator (19) with an adjustable level, summing circuit (20) receiving the output signals from attenuator (15) and reference voltage generator (19), and first logic decoding circuits (17) connected to the computer via input interface (16) and to attenuator (15) and reference voltage generator (19) to control the adjustment of the attenuation coefficient (Kg) of attenuator (15) and the reference voltage level (Vcg) of the reference voltage generator.

2. System as per claim 1, whereby the values of the attenuation coefficient (Kg) of attenuator (15) and the reference voltage level (Vcg) of reference voltage generator (19) are distribued as a series of discrete values forming different sensitivity ranges for the same number of elementary illuminance levels output by the graphic processor.

3. System as per claim 1 or claim 2 whereby attenuator (15) and reference voltage generator (19) consist of an adjustable resistive circuit controlled by first decoding logic circuits (17).

4. System as per one of claims 1 to 3, whereby the output of summing circuit (20) is connected to three switching logic circuits (21, 22, 23): red, green, blue, directing the patterns of signals from summing circuit (20) to a red gun, a green gun and a blue gun respectively of the color CRT via normalizing circuits (27, 28, 29).

5. System as per claim 4 whereby it includes means (24, 25, 26) for manually adjusting the excitation level of each of three guns: red, green and blue and second decoding logic circuits (18) receiving the control signals output by the computer via input interface (16) and a vertical flyback signal from the graphic processor to control switchover from individual operation of the red, green, blue switching logic circuits (21, 22, 23) to simultaneous operation creating neutral areas on the CRT.

6. System as per one of claims 1 to 5, whereby input interface (16) includes a universal asynchronous receiver-transmitter connected to the computer by a serial link.

EP 0 228 936 B1

7. System as per one of claims 1 to 6, whereby it includes five ranges of attenuation coefficients (Kg) per primary color and of reference voltage levels (Vcg) corresponding to five contrast ranges respectively, for instance between 1 and 0.003.

**Patentansprüche**

1. Vorrichtung zur Korrektur der Ausgangsdynamik eines Graphik-Prozessors (2) für eine Anwendung in einem Apparat zur Untersuchung des Leuchtdichtenkontrastes, bestehend aus einem Rechner (1), einem Graphik-Prozessor (2) und einem Bildschirm (4) für die Erregungsanzeige verschiedener, räumlichen und zeitlichen Frequenzen, **dadurch gekennzeichnet,** daß sie aus einem Eingangsadapter (14), der ein aus dem Graphik-Prozessor stammendes Leuchtdichtensignal empfängt, einem mit dem Ausgang des Eingangsadapters verbundenen Dämpfungsglied (15) mit einstellbarem Dämpfungsbeiwert, einem einstellbaren Bezugsspannungsgenerator (19), einem Summierglied (20), das die Ausgangssignale des Dämpfungsgliedes (15) und des Bezugsspannungsgenerators (19) empfängt, sowie aus den einerseits mit dem Rechner über eine Eingangsschnittstelle (16) und andererseits mit dem Dämpfungsglied (15) und dem Bezugsspannungsgenerator (19) verbundenen, ersten, logischen Decodierungskreise (17) zwecks Steuerung der Einstellung der Dämpfungsbeiwerte (Kg) des Dämpfungsgliedes (15) und des Bezugsspannungspegels (Vcg) des Bezugsspannungsgenerators (19) besteht.

2. Vorrichtung nach Anspruch 1, dadurch gekennzeichnet, daß die Dämpfungsbeiwerte (Kg) des Dämpfungsgliedes (15) und der Bezugsspannungspegel (Vcg) des Bezugsspannungsgenerators (19) nach einer Reihe diskreter Werte verteilt sind, die den Bereichen verschiedener Empfindlichkeit für eine gleiche Zahl der vom Graphik-Prozessor ermittelten Leuchtdichten-Elementarpegel entsprechen.

3. Vorrichtung nach Anspruch 1 oder 2, dadurch gekennzeichnet, daß das Dämpfungsglied (15) und der Bezugsspannungsgenerator (19) aus einem einstellbaren Widerstandsnetzwerk, das durch die ersten logischen Decodierungskreise (17) gesteuert wird.

4. Vorrichtung nach einem beliebigen Anspruch 1 bis 3, dadurch gekennzeichnet, daß der Ausgang des Summierglieds (20) mit drei logischen Schaltkreisen (21, 22, 23 - bzw. rot, grün, blau) verbunden ist, die die aus dem Summierglied (20) stammenden Signalwegenetze zum Rot-, Grün- bzw. Blaustrahlsystem des Bildschirmes über die Normierungsschaltungen (27, 28, 29) leiten.

5. Vorrichtung nach Anspruch 4, dadurch gekennzeichnet, daß sie aus Mitteln (24,25,26) zur Handeinstellung eines jeden Rot-, Grün- bzw. Blaustrahlsystems sowie aus zweiten, logischen Decodierungskreisen (18) besteht, die einerseits aus dem Rechner über die Eingangsschnittstelle (16) stammende Steuersignale und anderseits ein vom Graphik-Prozessor ermitteltes Rasterrückführungssignal für die Umschaltung vom individuellen Betrieb der logischen Schaltkreise rot, grün bzw. blau (21, 22, 23) zu einem gleichzeitigen Betrieb zur Erzielung neutraler Bereiche auf dem Bildschirm empfangen.

6. Vorrichtung nach einem beliebigen Anspruch 1 bis 5, dadurch gekennzeichnet, daß die Eingangsschnittstelle (16) aus einem mit dem Rechner über eine serielle Verbindung angeschlossenen, asynchronen Universal-Sender-Empfänger besteht.

7. Vorrichtung nach einem beliebigen Anspruch 1 bis 5, dadurch gekennzeichnet, daß sie mit fünf Dämpfungswertebereichen (Kg) pro Grundfarbe sowie mit Bezugsspannungspegeln (Vcg), die je an fünf z. B. zwischen 1 und 0,003 liegenden Konstrastbereichen entsprechen, betrieben wird.

7

Fig.1

Fig.2

Fig.6

Fig.3

Fig.4

Fig.5